# EUROPÄISCHE PATENTSCHRIFT

(11) **EP 3 175 748 B1**
(45) Veröffentlichungstag und Bekanntmachung des Hinweises auf die Patenterteilung: **06.06.2018**
(21) Anmeldenummer: 16197489.4
(22) Anmeldetag: 07.11.2016
(51) Int. Cl.: A47J 31/36

(54) **GETRÄNKEZUBEREITUNGSVORRICHTUNG, SYSTEM SOWIE BETRIEBSVERFAHREN**
BEVERAGE PREPARATION DEVICE, SYSTEM AND METHOD OF OPERATION
DISPOSITIF DE PRÉPARATION DE BOISSONS, SYSTÈME ET PROCÉDÉ DE FONCTIONNEMENT

(30) Priorität: 03.12.2015 DE 102015121029
(43) Veröffentlichungstag der Anmeldung: 07.06.2017
(73) Patentinhaber: Eugster/Frismag AG, 8580 Amriswil (CH)
(72) Erfinder: Riessbeck, Herr Wolfgang, 8597 Landschlacht (CH); Peyrot, Pascal, 9402 Mörschwil (CH); Salomon, Kai, 78315 Liggeringen-Radolfzell (DE)
(74) Vertreter: Patentanwälte Behrmann Wagner PartG mbB

(56) Entgegenhaltungen:
- EP-A1- 2 888 977
- WO-A1-2013/150480
- WO-A2-2008/142663
- WO-A2-2014/016741
- CN-A- 102 048 453
- CN-A- 102 599 816
- CN-A- 102 599 820
- CN-U- 201 987 327

## Beschreibung

Die Erfindung betrifft eine Getränkezubereitungsvorrichtung gemäß dem Oberbegriff des Patentanspruchs 1, insbesondere eine Kapselmaschine, zum Herstellen von Getränken aus, bevorzugt kompostierbaren, Getränkesubstratkapseln, insbesondere Kaffeekapseln, mit einem eine, bevorzugt horizontale, Standfläche definierenden Gehäuse (wobei die Standfläche bevorzugt von Gehäusefüßen oder einem Gehäusesockel definiert wird und weiter bevorzugt parallel zu einer Aufstellfläche ausgerichtet ist, auf der das Gehäuse, insbesondere mit Gehäusefüßen oder einem Gehäusesockel aufsteht), mit einer Injektionseinrichtung zum Auflösen und/oder Auslaugen von in einer Getränkesubstratkapsel bevorratetem Getränkesubstrat, wie beispielsweise Sirup, auflösbares Granulat, Milchpulver, Kakaopulver, Kaffeemehl und/oder Teesubstrat, und mit, insbesondere eine Wasserfördereinrichtung, wie beispielsweise eine Pumpe umfassende Wasserversorgungsmitteln zum Versorgen der Injektionseinrichtung mit Wasser, wobei die Injektionseinrichtung eine Injektionskammer zur Aufnahme der Getränkesubstratkapsel aufweist, umfassend ein erstes Injektionskammerteil, das, bevorzugt translatorisch, relativ zu einem, bevorzugt ortsfesten, zweiten Injektionskammerteil zum Öffnen und Schließen der Injektionskammer zwischen einer Öffnungsposition, in der die Injektionskammer geöffnet und einer Getränkesubstratkapsel zuführbar ist und einer Schließposition, in der die Injektionskammer geschlossen ist, entlang einer, insbesondere geradlinigen oder alternativ gekrümmten, beispielsweise teilkreisförmigen, Bewegungsbahn verstellbar ist, sowie mit einer Auswurföffnung, durch die die Getränkesubstratkapsel nach dem Injektionsvorgang auswerfbar ist, sowie mit eine, insbesondere durch das Verstellen des ersten Injektionskammerteils in Richtung des zweiten Injektionskammerteils, um eine erste Schwenkachse aus einer Zuführposition in eine Freigabeposition verschwenkbare erste Klappe umfassenden Rückhaltemitteln zum Sichern der Getränkesubstratkapsel vor einem Durchfallen durch die Auswurföffnung beim Zuführvorgang, wobei die Schwenkachse der mindestens einen Klappe, bevorzugt die Schwenkachsen mehrerer Klappen, nicht parallel zur Standfläche des Gehäuses ausgerichtet ist, sondern winklig, insbesondere rechtwinklig oder alternativ einen von 90° unterschiedlichen Winkel (oder einen hiervon abweichenden Winkel), beispielsweise von 45° hierzu aufweist. Dabei übernimmt die Klappe bevorzugt nicht die Funktion einer Rutsche sondern verhindert das Durchfallen der, bevorzugt mit Abstand zu dem zweiten Injektionskammerteil positionierten Getränkesubstratkapsel durch die, insbesondere untere Auswurföffnung, wobei die erste Klappe entgegen der Federkraft von Federmitteln um die erste Schwenkachse verschwenkbar ist, wobei die Federmittel die erste Klappe in Richtung ihrer Zuführ(schwenk)position federkraftbeaufschlagen. Für den Fall des Vorsehens einer weiteren (zweiten) Klappe ist es bevorzugt, wenn auch diese entgegen der Federkraft von Federmitteln um ihre Schwenkachse verschwenkbar angeordnet sind und die Federmittel bestrebt sind die Klappe in Richtung Zuführposition zu beaufschlagen.

Ferner betrifft die Erfindung ein eine Getränkezubereitungsvorrichtung sowie eine Getränkesubstratkapsel umfassendes System gemäß Anspruch 10.

Darüber hinaus betrifft die Erfindung ein Verfahren zum Betreiben einer vorgenannten Getränkezubereitungsvorrichtung gemäß Anspruch 11.

Bei sogenannten Kapselmaschinen, bei denen Getränke durch Injektion von Wasser in Getränkesubstratkapseln hergestellt werden, wird üblicherweise die Getränkesubstratkapsel in eine offene Injektionskammer, in der Regel eine Brühkammer gelegt, woraufhin die Injektionskammer, meist über eine Schwenkhebelbewegung verschlossen und dabei die Getränkesubstratkapsel beidseitig geöffnet wird, um auf einer ersten Seite von Wasserversorgungsmitteln zur Verfügung gestelltes Wasser, in der Regel Heißwasser zu injizieren und gegenüberliegend das fertige Getränk herauszuleiten.

Aus der EP 2 405 790 A1 ist eine Getränkezubereitungsvorrichtung bekannt geworden, bei welcher die Getränkesubstratkapsel über eine schräge Rutsche in ein Injektionskammerteil zugeführt wird, woraufhin dann die Injektionskammer mittels eines weiteren, gegenüberliegenden Injektionskammerteils verschlossen wird, welches hierfür translatorisch entlang einer Verstellachse auf das die Getränkesubstratkapsel aufweisende Injektionskammerteil verstellt wird. Zum Verstellen dieses translatorisch verstellbaren Injektionskammerteils ist ein Schwenkhebelmechanismus vorgesehen. Die Rutsche ist in der Art einer Klappe verschwenkbar gelagert, und zwar um eine parallel zu einer Standfläche der Getränkezubereitungsvorrichtung verlaufende Schwenkachse. Die Rutsche wird dabei mittels des verstellbaren Injektionskammerteils durch Verstellen desselben in Richtung des gegenüberliegenden Injektionskammerteils nach oben weggeschwenkt. Die Rutsche bzw. Klappe hat nicht nur eine Rutschfunktion sondern stützt die Getränkesubstratkapsel nach dem Einwerfen deckelseitig, um somit ein Herausfallen durch eine untere Auswerföffnung sicher zu verhindern.

Als nachteilig bei der bekannten Getränkezubereitungsvorrichtung wird empfunden, dass die Getränkesubstratkapsel entweder manuell oder über eine Rutsche prinzipbedingt einem ortsfest angeordneten Injektionskammerteil unmittelbar zugeführt werden muss, woraufhin dann die Injektionskammer durch Verstellen des weiteren Injektionskammerteils verschlossen wird. Es besteht jedoch der Wunsch nach Kapselgetränkezubereitungsvorrichtungen, bei denen die Positionierung der Getränkesubstratkapsel nicht unmittelbar in einem feststehenden Injektionskammerteil erfolgen muss, sondern bei der die Getränkesubstratkapsel hiervon beabstandet positioniert werden kann und trotzdem ein Herausfallen aus einer, insbesondere unteren Auswertöffnung beim Einlegevorgang sicher verhindert wird.

Aus der EP 2 337 479 B1 ist eine Kapselmaschine bekannt, mit der die Kapselführung vor und nach einem Brühvorgang verbessert werden soll. Der von einem Umfangsbund gebildete Kapselrand wird seitlich über zwei jeweils mit einer Nut versehene Klappen gehalten, wodurch verhindert wird, dass die Kapsel während einer Brühkammerteilbewegung nach unten durch eine Auswurföffnung herausfällt. Die Klappen sind dabei entgegen der Federkraft von Federn verstellbar, die unmittelbar an den Klappen angreifen.

Die EP 1 721 553 B1 zeigt eine Kapselmaschine, die ebenfalls Klappen zur Unterstützung der Kapselbewegung aufweist. Bei der bekannten Lösung erfolgt eine Rückverstellung der Klappen über einen Zugfedermechanismus mit unmittelbar an den Klappen angreifenden Zugfedern. Nachteilig bei der bekannten Lösung ist unter Anderem der stark eingeschränkte Schwenkwinkel der Klappen und die daraus resultierende vergleichsweise lange Bauweise des bewegten Brühkammerteils, da dieses die Kapsel sehr frühzeitig bei seiner Verstellbewegung untergreifen muss.

Aus der CN 102048453 A ist eine Kapselmaschine bekannt, die Klappen zum Zurückhalten der Kapsel aufweist. Die Klappen sind entgegen der Federkraft von Rückstellfedern verschwenkbar, wobei sich die Rückstellfedern unmittelbar an den Klappen abstützen.

Zum weiteren Stand der Technik werden die WO 2014/016741 A2, die EP 2 888 977 A1, die WO 2008/142663 A2, die WO 2013/150480 A1, die CN 102599820 A sowie die CN 102599816 und die CN 102987327 U genannt.

Ausgehend von dem Stand der Technik liegt daher der Erfindung die Aufgabe zugrunde, eine Getränkezubereitungsvorrichtung, insbesondere Kapselmaschine anzugeben, bei der bevorzugt ohne das Vorsehen einer Rutsche ein Hindurchfallen einer Getränkesubstratkapsel beim Einlegevorgang durch die Auswerföffnung sicher verhindert wird, wobei bevorzugt (jedoch nicht zwingend) die Getränkesubstratkapsel mit Abstand zu dem zweiten Injektionskammerteil positionierbar ist. Ferner besteht die Aufgabe darin, ein optimiertes Betriebsverfahren für eine solche alternative Getränkezubereitungsvorrichtung anzugeben.

Diese Aufgabe wird hinsichtlich der Getränkezubereitungsvorrichtung mit den Merkmalen des Anspruchs 1 gelöst.

Besonders bevorzugt ist es, wenn die mindestens eine Klappe in der Art einer seitlich verschwenkbaren Tür ausgebildet und angeordnet ist, die bevorzugt in einem Aussparungsbereich von der Getränkesubstratkapsel entlang einer Verstellachse bzw. Bewegungsbahn des ersten Injektionskammerteils durchsetzt ist. Ganz besonders bevorzugt ist das Vorsehen von zwei, insbesondere in der Art von Saloon-Türen angeordneten in einander entgegengesetzte Schwenkrichtungen verschwenkbare Klappen.

Lediglich der Vollständigkeit halber sei an dieser Stelle erwähnt, dass die Getränkezubereitungsvorrichtung auch mit einer einzigen, nämlich der ersten Klappe (der Rückhaltemittel) realisierbar ist, wobei die vorerwähnte Ausführung mit zwei, insbesondere einander gegenüberliegenden Klappen bevorzugt ist.

Unter der Standfläche der Getränkezubereitungsvorrichtung, die von dem Gehäuse definiert wird, insbesondere von Gehäusefüßen und/oder einem Gehäusesockel wird die Orientierung einer Gehäusegrundfläche verstanden, die senkrecht verläuft zu einer Hochrichtung des Gehäuses sowie senkrecht verläuft zu einer senkrecht zur Hochrichtung verlaufenden Breitenerstreckung des Gehäuses. In der Regel ist die Standfläche parallel zu einer Aufstellfläche, auf der die Getränkezubereitungsvorrichtung bestimmungsgemäß aufsteht, beispielsweise einer Küchenarbeitsplatte oder einer Theke. In der Regel sind Aufstellfläche und Standfläche horizontal orientiert.

Im Hinblick auf die konkrete Ausgestaltung der Injektionskammer gibt es unterschiedliche Möglichkeiten. So ist es möglich und bevorzugt, die Injektionskammer als sogenannte geschlossene Injektionskammer auszubilden, bei der in der geschlossenen Position die Getränkesubstratkapsel vollständig dicht umschlossen ist von dem ersten und dem zweiten Injektionskammerteil, die dann vollumfänglich unmittelbar gegeneinander abgedichtet sind. Grundsätzlich ist es alternativ auch denkbar, die Injektionskammer als sogenannte offene Injektionskammer auszugestalten, bei der insbesondere nicht unmittelbar vollumfänglich das erste und das zweite Injektionskammerteil gegeneinander abgedichtet sind, sondern die beiden Injektionskammerteile, insbesondere stirnseitig gegen die Getränkesubstratkapsel abdichten, letztere also einen Bestandteil, also quasi ein Zwischenstück der Injektionskammer bildet. Zu diesem Zweck stützen sich dann bevorzugt beide Injektionskammerteile über jeweils mindestens eine Elastomerdichtung, bevorzugt jeweils stirnseitig an der Kapsel ab. Es muss dann jedoch sichergestellt sein, dass die Getränkesubstratkapsel die wirkenden Kräfte, insbesondere ohne übermäßige plastische Deformation aufnehmen kann.

Hinsichtlich des Betriebsverfahrens wird die Aufgabe mit den Merkmalen des Anspruchs 11 gelöst.

Vorteilhafte Weiterbildungen der Erfindung sind in den Unteransprüchen angegeben.

Der Erfindung liegt der Gedanke zugrunde, die bevorzugt nicht als Rutsche dienende erste Klappe (und bevorzugt gleichzeitig eine später noch zu erläuternde zweie Klappe) derart verschwenkbar anzuordnen, dass deren Schwenkachse(n) winklig, bevorzugt rechtwinklig zu der Standfläche der Getränkezubereitungsvorrichtung ausgerichtet ist/sind, insbesondere bei einer horizontal orientierten Standfläche vertikal. Hierdurch ist es möglich, die Getränkesubstratkapsel bei in der Zuführposition befindlicher Klappe derart zuzuführen, dass sie in der zugeführten und bevorzugt in der Bewegungsbahn des ersten Injektionskammerteils liegenden Position beabstandet ist von dem zweiten Injektionskammerteil und um somit mithilfe des ersten Injektionskammerteils in Richtung des zweiten Injektionskammerteils verstellt werden zu können. Die mindestens eine Klappe der Rückhaltemittel, die zu diesem Zweck die Getränkesubstratkapsel bevorzugt mantelseitig bzw. in einem Bereich zwischen dem Mantel der Getränkesubstratkapsel und der bevorzugt darunter befindlichen Auswurföffnung unter- bzw. hintergreift, kann um ihre nicht horizontal verlaufende Schwenkachse, insbesondere nach seitlich aus der Bewegungsbahn des ersten Injektionskammerteils heraus verschwenkt werden, wobei es ganz besonders bevorzugt ist, wenn die mindestens eine Klappe derart angeordnet ist, dass deren Stütz- bzw. Rückhaltefunktion erst dann endet, wenn die Getränkesubstratkapsel von anderen Elementen der Getränkezubereitungsvorrichtung, insbesondere dem zweiten Injektionskammerteil und/oder dem ersten Injektionskammerteil übernommen wird, um somit ein Herausfallen durch die Auswurföffnung auch während der Verstellbewegung der Getränkesubstratkapsel in Richtung des zweiten Injektionskammerteils zu verhindern.

Wie später noch erläutert werden wird, ist es besonders bevorzugt, wenn insgesamt zwei, insbesondere auf zwei einander gegenüberliegenden Seiten einer Bewegungsbahn des ersten Injektionskammerteils um jeweils eine Schwenkachse, bevorzugt ineinander entgegengesetzte Schwenkrichtungen verschwenkbar gelagerte Klappen vorgesehen sind, die die Getränkesubstratkapsel gemeinsam stützen und die, insbesondere durch das Verstellen des ersten Injektionskammerteils, insbesondere durch Drücken des ersten Injektionskammerteils bzw. einer mit diesem mitbewegten Komponente druckbeaufschlagt werden und somit um die jeweilige Schwenkachse, insbesondere seitlich nach außen aus der Bewegungsbahn herausklappen. Bevorzugt verläuft eine Flächenerstreckung der ersten und/oder zweiten Klappe senkrecht zur Standfläche, d.h. bei einer bevorzugt horizontalen Standfläche vertikal.

Die erfindungsgemäße Getränkezubereitungsvorrichtung stellt durch das Vorsehen der, mindestens eine um ihre Schwenkachse verschwenkbare Klappe umfassenden, Rückhaltemittel sicher, dass die Getränkezubereitungsvorrichtung beim Zuführvorgang nicht nach unten durch die Auswurföffnung durchfallen kann sondern untergreift diese. Bevorzugt wird die Getränkesubstratkapsel hierzu aus einer Richtung von oben zugeführt, so dass die Getränkesubstratkapsel abschnittsweise in der Zuführposition des ersten Injektionskammerteils auf der Klappe zum liegen kommt. Dabei ist eine Getränkesubstratkapsel bevorzugt derart ausgerichtet, dass eine den Deckel senkrecht durchsetzende Längsmittelachse parallel zur Standfläche verläuft und/oder bevorzugt zusammenfällt mit einer geradlinigen Verstellachse des ersten Injektionskammerteils. Bevorzugt verrutscht die Getränkesubstratkapsel dabei nicht in der Art einer Rutsche auf der Klappe in bzw. auf das zweite Injektionskammerteil sondern kommt mit Abstand, insbesondere Axialabstand entlang einer, bevorzugt translatorischen Verstellachse des ersten Injektionskammerteils mit Abstand zu dem zweiten Injektionskammerteil auf der mindestens einen Klappe zu liegen.

Hierdurch ist es möglich, die Getränkesubstratkapsel mit Abstand zum zweiten Injektionskammerteil zu positionieren und trotzdem ein Hindurchfallen durch die Auswurföffnung sicher zu verhindern.

Bevorzugt ist es, wenn keine starre Positionsabhängigkeit zwischen einer Verstellposition des ersten Injektionskammerteils und einer Verstellposition der mindestens einen Klappe gegeben ist, sondern das erste Injektionskammerteil lediglich, falls dieses in Richtung des zweiten Injektionskammerteils verstellt ist, einen Anschlag für die mindestens eine Klappe bildet, bis zu dem die mindestens eine Klappe in Richtung Zuführposition rückverstellbar ist. In die entgegengesetzte Schwenkrichtung wiederum kann die mindestens eine Klappe bevorzugt, beispielsweise manuell verschwenkt werden - insofern bildet das erste Injektionskammerteil bevorzugt keine Bewegungsbegrenzung.

Erfindungsgemäß ist vorgesehen, dass sich die Federmittel nicht unmittelbar an der zugehörigen Klappe, insbesondere deren Betätigungsklappenflügel abstützen, sondern mittelbar über ein Druckstück, welches, ganz besonders bevorzugt außerhalb der Bewegungsbahn des ersten Injektionskammerteils, verstellbar, insbesondere verschiebbar geführt ist. Dabei ist es besonders zweckmäßig, wenn das Druckstück derart federkraftbeaufschlagt ist, dass es sich gegenläufig zu einer Verstellbewegung des ersten Injektionskammerteils bewegt, derart, dass das Druckstück über die zugehörige Klappe in eine Richtung von dem zweiten Injektionskammerteil, vorzugsweise parallel zu einer Verstellachse des ersten Injektionskammerteils weg verstellt wird, wenn sich letzteres auf das zweite Injektionskammerteil zum Schließen der Injektionskammer zu bewegt. Dabei spannt dann das Druckstück die Federmittel vor, welche das Druckstück nach beendetem Injektionsprozess, insbesondere während sich das zweite Injektionskammerteil zurück in Richtung einer Ausgangsposition von dem zweiten Injektionskammerteil weg bewegt, in Richtung des zweiten Injektionskammerteils verstellen. Besonders zweckmäßig ist es, wenn zusätzlich ein weiterer Anschlag vorgesehen ist, um den Verstellweg des Druckstücks auch in die entgegengesetzte Richtung zu begrenzen.

Für den Fall des bevorzugten Vorsehens von zwei Klappen ist es zweckmäßig, jeder Klappe ein Druckstück zuzuordnen, das mit entsprechenden Federmitteln auf die jeweilige Klappe druckbeaufschlagt ist. Grundsätzlich ist es möglich, ein gekoppeltes bzw. gemeinsames Druckstück und/oder gekoppelte bzw. gemeinsame Federmittel vorzusehen.

Das Vorsehen mindestens eines Druckstücks ermöglicht es auch durch das Zuordnen mindestens eines Anschlags, die Verstellbewegung des Druckstücks und damit der Klappe zu begrenzen, insbesondere derart, dass der Anschlag die Zuführposition der dem Druckstück zugeordneten Klappe definiert.

In Weiterbildung der Erfindung ist mit Vorteil vorgesehen, dass die mindestens eine Klappe derart relativ zu dem ersten Injektionskammerteil angeordnet ist, dass eine zugeführte Getränkesubstratkapsel, die bevorzugt einen Kapseldeckel umfasst, welcher noch weiter bevorzugt in radialer Richtung über einen, beispielsweise zylindrischen oder konischen Kapselmantel vorsteht, sich in einem Bereich zwischen der ersten Klappe und dem ersten Injektionskammerteil erstreckt. Mit anderen Worten fällt oder rutscht die Getränkesubstratkapsel beim Einlegevorgang in eine Position, in der sie die erste Klappe (und bevorzugt falls vorgesehen auch eine zweite Klappe), insbesondere mit ihrem Deckel überragt, insbesondere in axialer Richtung entlang einer Verstellachse des ersten Injektionskammerteils, und zwar in Richtung des ersten Injektionskammerteils, so dass die Getränkesubstratkapsel, insbesondere im Bereich ihres Masseschwerpunktes, von der mindestens einen Klappe aufgefangen ist. Darüber hinaus ermöglicht eine derartige Positionierung der ersten Klappe und bevorzugt auch einer, insbesondere spiegelsymmetrisch angeordneten, noch weiter bevorzugt identischen, zweiten Klappe ein Verschwenken der jeweiligen Klappe um deren Schwenkachse, ohne dabei mit der Getränkesubstratkapsel, insbesondere einem radial vorstehenden Deckel zu kollidieren, insbesondere dann, wenn die Klappe(n) um ihre jeweilige Schwenkachse in Richtung des zweiten Injektionskammerteils kraftbeaufschlagt wird/werden. Bevorzugt weist (jede) Klappe einen Hinterschnittbereich auf, d.h. einen Abstützbereich bzw. einen Auflageabschnitt, der die Getränkesubstratkapsel auf ihrer Unterseite, insbesondere mantelseitig (ganz besonders bevorzugt im Bereich eines unterhalb des Deckels befindlichen Absatzes bzw. Stufe) hintergreift, so dass die Getränkesubstratkapsel quasi in der jeweiligen Klappe aufgenommen ist und eine Flächenerstreckungsebene der mindestens einen Klappe, insbesondere entlang einer translatorischen Verstellachse des ersten Injektionskammerteils durchsetzt.

Besonders bevorzugt ist es, wenn der Auflageabschnitt der mindestens einen Klappe formkongruent zur Getränkesubstratkapsel, insbesondere zu deren Mantelseite ausgebildet ist, ganz bevorzugt gerundet, bevorzugt in Form eines Teilkreisbogens.

Im Hinblick auf die Anordnung und Ausbildung der Federmittel gibt es unterschiedliche Möglichkeiten. Als besonders zweckmäßig hat es sich herausgestellt, wenn den Federmitteln ein Betätigungsklappenflügel der zugehörigen Klappe zugeordnet ist, der einen(m) Halte- bzw. Auflageabschnitt für die Getränkesubstratkapsel ausbildenden Halteflügel der Klappe, bezogen auf die Klappenschwenkachse gegenüberliegt und der dazu dient, die Getränkesubstratkapsel vor einem Durchfallen durch die Auswurföffnung zu sichern. Dabei ist es grundsätzlich möglich, dass Betätigungsklappenflügel und Halteflügel in einer gemeinsamen Ebene liegen, wobei es zweckmäßiger ist, wenn Halteflügel und Betätigungsklappenflügel einen Winkel von ungleich 180° (bevorzugt >100° und <170°) aufspannen.

Ein Auswurfvorgang für Getränkesubstratkapseln aus einem Injektionskammerteil nach beendeter Injektion ist insbesondere dann problematisch, wenn es sich um eine kompostierbare Getränkesubstratkapsel handelt, da kompostierbare Kunststoffe bei Wärmeeinwirkung vergleichsweise weich werden und somit leicht deformierbar sind bzw. aufgebrachte Kräfte die Getränkesubstratkapsel plastisch verformen, was dazu führen kann, dass die Getränkesubstratkapsel in der Injektionskammer, insbesondere in dem zweiten Injektionskammerteil hängen bleibt bzw. verkantet. Zur Lösung dieses Problems wird in Weiterbildung der Erfindung vorgeschlagen, dass dem zweiten Injektionskammerteil, ein insbesondere bodenseitiger, (Auswurf-) Stempel, zum Verstellen der Getränkesubstratkapsel aus dem zweiten Injektionskammerteil heraus, insbesondere in Richtung des ersten Injektionskammerteils zugeordnet ist, um die Getränkesubstratkapsel während oder nach dem Zurückverstellen des ersten Injektionskammerteils in seine Ausgangsposition auszuwerfen. Der Stempel drückt dabei bevorzugt auf einen den Getränkesubstratkapseldeckel gegenüberliegenden (stirnseitigen) Kapselboden. Im Hinblick auf die Betätigung bzw. den Antrieb eines solchen Auswerfers (Stempels) gibt es unterschiedliche Möglichkeiten. So kann dieser beispielsweise über einen von einer Steuereinheit gesteuerten separaten Motor ansteuerbar sein oder manuell betätigbar sein. Auch ist es denkbar, diesen in einer gekoppelten Bewegung zusammen mit dem ersten Injektionskammerteil verstellbar auszubilden.

Bevorzugt stellt also der Stempel nach einem Injektionsprozess die Getränkesubstratkapsel in Richtung des ersten Injektionskammerteils und/oder in Richtung der mindestens einen Klappe, wobei durch die Position der Getränkesubstratkapsel an oder in dem zweiten Injektionskammerteil sichergestellt ist, dass sich die Getränkesubstratkapsel in einem Bereich zwischen der mindestens einen Klappe und dem zweiten Injektionskammerteil befindet, so dass eine haltende bzw. rückhaltende Wechselwirkung der mindestens einen Klappe mit der Getränkesubstratkapsel zum Verhindern eines Herausfallens durch die Auswurföffnung sicher verhindert wird und die Getränkesubstratkapsel mittels des Stempels verstellt und dann durch die Auswurföffnung fallen kann.

Wie bereits angedeutet ist es bevorzugt, wenn die erste Klappe (und falls vorgesehen bevorzugt eine zweite Klappe) derart um die zugehörige Schwenkachse verschwenkbar ist, dass die Getränkesubstratkapsel beim Verstellen aus dem zweiten Injektionskammerteil vollständig in einen Bereich zwischen der ersten Klappe (und ggf. der zweiten Klappe) und dem zweiten Injektionskammerteil angeordnet ist, um dann durch die Auswurföffnung ausgeworfen werden zu können. Dies kann dadurch sichergestellt werden, dass die Getränkesubstratkapsel, insbesondere mittels des ersten Injektionskammerteils aus einer ursprünglichen Einwurf- bzw. Zuführposition, in der die Getränkesubstratkapsel auf der mindestens einen Klappe aufliegt relativ zu der Schwenkachse der zugehörigen Klappe, insbesondere entlang der Bewegungsbahn des ersten Injektionskammerteils verstellt wird und somit außerhalb des Wirkungsbereichs der mindestens einen Klappe gelangt.

Die Erfindung betrifft auch ein System, umfassend eine nach dem Konzept der Erfindung ausgebildete Getränkezubereitungsvorrichtung und eine in diese zuführbare Getränkesubstratkapsel, beinhaltend Getränkesubstrat, welches je nach Ausbildung der Getränkezubereitungsvorrichtung bzw. eines Getränkezubereitungsprogramms mit kaltem oder erhitztem Wasser beaufschlagt werden kann, um daran befindliches Substrat aufzulösen und/oder auszulaugen. Die Getränkesubstratkapsel weist bevorzugt einen in radialer Richtung über einen Getränkesubstratkapselmantel vorstehenden Deckel auf, wobei es besonders bevorzugt ist, wenn die Getränkesubstratkapsel nach dem Einwerfen bzw. Zuführen bei in der Zuführposition befindlicher Klappe, insbesondere mittels des Deckels, in einen Bereich zwischen der mindestens einen Klappe und dem ersten Injektionskammerteil hineinragt und dann in eine Richtung von dem Deckel weg um die winklig, insbesondere rechtwinklig zur Standfläche angeordnete Schwenkachse verschwenkt wird.

Das erfindungsgemäße Verfahren zeichnet sich dadurch aus, dass zunächst eine Getränkesubstratkapsel zugeführt wird und diese in Kontakt mit der mindestens einen, in ihrer Zuführposition befindlichen Klappe gelangt derart, dass die Klappe ein Hindurchfallen durch die, vorzugsweise darunter befindliche Auswurföffnung verhindert. Bevorzugt wird die Getränkesubstratkapsel derart zugeführt, dass diese sich bei in der Zuführposition befindlichen erster Klappe durch bzw. über diese hinweg erstreckt, wobei dann ein Teil zwischen der Klappe und dem ersten Injektionskammerteil und der weitere bzw. andere Abschnitt der Getränkesubstratkapsel in einem Bereich zwischen der ersten Klappe und dem zweiten Injektionskammerteil angeordnet ist.

Daraufhin wird die mindestens eine Klappe, insbesondere seitlich, um ihre Schwenkachse verschwenkt, insbesondere beim und/oder durch das Verstellen des ersten Injektionskammerteils in Richtung des zweiten Injektionskammerteils, wobei eine Stütz- bzw. Rückhaltefunktion der mindestens einen Klappe bevorzugt erst dann endet, wenn ein Hindurchfallen der Getränkesubstratkapsel durch die Auswurföffnung durch andere Funktionselemente der Getränkezubereitungsvorrichtung (insbesondere des ersten Injektionskammerteils und/oder des zweiten Injektionskammerteils), insbesondere nach einem zumindest abschnittsweise Verstellen des ersten Injektionskammerteils und/oder der Getränkesubstratkapsel übernommen wurde.

Besonders zweckmäßig ist eine Ausführungsvariante des Verfahrens, wonach die Getränkesubstratkapsel zusammen mit dem ersten Injektionskammerteil zum Schließen der Injektionskammer in Richtung des zweiten Injektionskammerteils verstellt und dabei die mindestens eine Klappe um die zugehörige Schwenkachse verschwenkt wird, und dass nach erfolgter Wasserinjektion die Getränkesubstratkapsel aus dem zweiten Injektionskammerteil, insbesondere mittels eines bodenseitigen Stempels herausverstellt wird und sich dabei vollständig in einen Bereich zwischen dem zweiten Injektionskammerteil und der ersten Klappe befindet, d.h. die erste Klappe nicht (mehr) durchsetzt und durch die Auswurföffnung, insbesondere nach unten ausgeworfen wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Draufsicht auf eine Getränkesubstratkapselhandhabungseinrichtung inkl. Injektionseinrichtung, wobei sich die Klappen der Rückhaltemittel in einer Zuführposition befindet und bereits eine Getränkesubstratkapsel eingelegt ist,
- Fig. 2:: die Komponenten gemäß Fig. 1 in einer geschnitten Frontansicht,
- Fig. 3:: ein Detail der Vorrichtung, welches die Funktionsweise einer der Klappen der Rückhaltemittel erläutert,
- Fig. 4:: einen Betriebszustand während des Verstellens der Getränkesubstratkapsel zusammen mit einem ersten Injektionskammerteil in Richtung eines zweiten Injektionskammerteils und bereits teilweise verschwenkten Klappen,
- Fig. 5:: einen Betriebszustand mit nahezu geschlossener Injektionskammer,
- Fig. 6:: einen Betriebszustand nach bereits erfolgter Injektion und abschnittsweise zurückverstelltem Injektionskammerteils,
- Fig. 7:: einen Betriebszustand während des Auswerfens der Getränkesubstratkapsel aus dem ersten Injektionskammerteil nach beendeter Injektion,
- Fig. 8:: eine Momentaufnahme vor dem Hindurchtreten der Getränkesubstratkapsel durch eine untere Auswurföffnung, und
- Fig. 9:: die Funktionseinheit mit ausgeworfener bzw. ohne Getränkesubstratkapsel mit wieder in der Zuführposition befindlichen Klappen zur Aufnahme einer neuen Substratkapsel.

In den Figuren sind gleiche Elemente und Elemente mit der gleichen Funktion mit den gleichen Bezugszeichen gekennzeichnet.

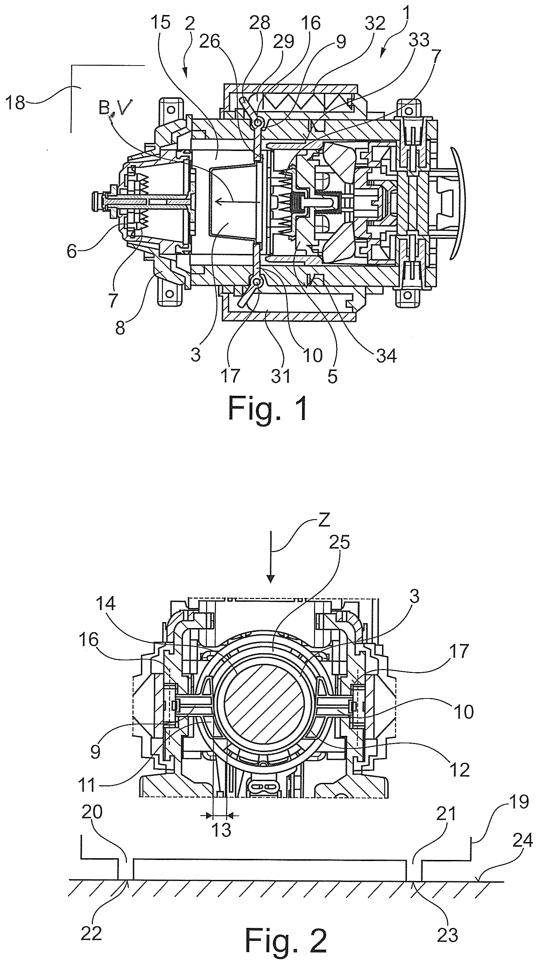

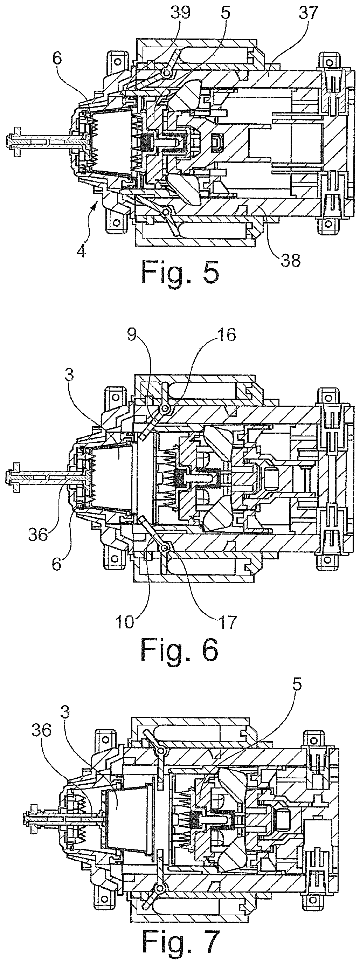

In Fig. 1 ist ausschnittsweise eine Getränkezubereitungsvorrichtung 1 gezeigt. Zu erkennen ist hier eine als Brüheinheit ausgebildete Injektionseinrichtung 2 zum Injizieren von Wasser in eine Getränkesubstratkapsel 3, welche zum Injizieren in einer geschlossenen Injektionskammer 4 (vgl. Fig. 5 - dort ist die Injektionskammer 4 nahezu verschlossen) aufgenommen ist.

Die Injektionskammer 4 wird gebildet bzw. ist begrenzt von einem entlang einer Bewegungsbahn B, hier beispielhaft einer geradlinigen Verstellachse V, beispielhaft translatorisch verstellbarem ersten Injektionskammerteil 5 sowie einem, hier beispielhaft und bevorzugt becherförmigem, ortsfesten zweiten Injektionskammerteil 6. Das erste Injektionskammerteil 5 ist zum Schließen der Injektionskammer 4 entlang der Bewegungsbahn B, hier konkret entlang der geradlinigen Verstellachse V in Richtung auf das zweite Injektionskammerteil 6 zu verstellbar und nimmt dabei die zuvor in einer in Fig. 2 gezeigten, vertikalen Zuführrichtung Z zugeführte und mit ihrer Längsmittelachse horizontal ausgerichtete Getränkesubstratkapsel 4 mit entlang der Bewegungsbahn B.

In dem gezeigten Ausführungsbeispiel wird die Injektionskammer 4 über das erste Injektionskammerteil 5 mit nicht näher gezeigten, eine nicht gezeigte Fördereinrichtung umfassenden Wasserversorgungsmitteln mit von fakultativen integralen Heizmitteln der Vorrichtung erwärmtem Wasser, oder auf Umgebungstemperatur belassenem Wasser oder mit fakultativen Kühlmitteln gekühltem Wasser versorgt.

Zu erkennen ist, dass sowohl im ersten Injektionskammerteil 5 als auch im zweiten Injektionskammerteil 6 Öffnungsmittel 7, konkret Aufstechmittel zum Öffnen der Getränkesubstratkapsel 3 auf beiden Stirnseiten beim Schließen der Injektionskammer 4 angeordnet sind.

Aus Fig. 1 ist weiter ersichtlich, dass das zweite, ortsfeste Injektionskammerteil 6 an einer Rahmenstruktur 8 gehalten ist, entlang derer bzw. in der das erste Injektionskammerteil 5, beispielsweise über einen Schwenkhebelmechanismus, eine manuelle translatorische Verstelleinrichtung oder elektromotorisch aktuiert verstellbar ist.

Zu erkennen ist, dass bei dem in den Fig. 1 und 2 gezeigten Betriebszustand von der Seite her in die Bewegungsbahn B eine erste und eine zweite Klappe 9, 10 ragen, die, wie aus Fig. 2 zu erkennen ist, mit einem jeweiligen ersten bzw. zweiten Auflageabschnitt 11, 12 (Abstützabschnitt bzw. Halteabschnitt) die Getränkesubstratkapsel 3 mantelseitig, d.h. im Bereich eines umfänglichen Mantels 14 bzw. einer hier beispielhaft konisch verlaufenden Umfangswand untergreifen, und zwar in einem Bereich in vertikaler Richtung zwischen der Getränkesubstratkapsel 3 und einer (unteren) Auswurföffnung 15, durch die die Getränkesubstratkapsel 3, wie später noch erläutert werden wird, nach erfolgtem Getränkeherstellungsprozess ausgeworfen werden bzw. herausfallen kann. Die Auflageabschnitte 11, 12 werden gebildet von einem (Hinterschnitt-) Bereich 13 jeder Klappe, der sich bezogen auf den Durchmesser in radialer Richtung in einen Bereich unterhalb dieses Durchmessers bzw. des Mantels 14 erstreckt, d.h. die Getränkesubstratkapsel hintergreift bzw. hinterschneidet. Wie sich weiter aus den Figuren ergibt, sind Klappen 9, 10 in der Zuführposition spiegelsymmetrisch zu einer die Verstellachse V aufnehmenden, vertikalen Spiegelebene in der Art von Saloontüren angeordnet. Die beiden Klappen 9, 10 verhindern in ihrer in den Fig. 1 und 2 dargestellten Zuführposition (Schwenkendposition) jedoch ein Herausfallen der Getränkesubstratkapsel 3 durch die vorerwähnte Auswurföffnung 15, indem sie die Getränkesubstratkapsel 3 zurückhalten bzw. untergreifen.

Jede Klappe 9, 10 ist um eine ihr zugeordnete erste bzw. zweite Schwenkachse 16, 17 verschwenkbar angeordnet, wobei die Schwenkachsen 16, 17 in dem gezeigten Ausführungsbeispiel vertikal und zueinander parallel orientiert sind. Dies ist darauf zurückzuführen, dass sie senkrecht angeordnet sind zu einer in Fig. 1 angedeuteten, hier beispielhaft horizontalen Standfläche 18 der Getränkezubereitungsvorrichtung 1, die in dem konkreten Ausführungsbeispiel definiert wird von einem in Fig. 2 angedeuteten Gehäuse 19, konkret von Gehäusefüßen 20, 21. Die Gehäusefüße 20, 21 weisen jeweils eine Unterseite 22, 23 auf, wobei die Standfläche sich über sämtliche Unterseiten 22, 23 erstreckt bzw. von diesen definiert wird. Bei konkret justierter bzw. ausgerichteter Getränkezubreitungsvorrichtung 1 ist diese maschinenseitige Standfläche (Standebene) parallel zu einer festen Aufstellfläche 24, auf der die Getränkezubereitungsvorrichtung 1 mittels ihres Gehäuses 19, in dem konkreten Ausführungsbeispiel der Gehäusefüße 20, 21 aufsteht.

Zu erkennen ist, dass die Getränkesubstratkapsel 3 die Klappen 9, 10 bzw. eine von diesen definierte, hier vertikale, Klappenebene in der Zuführposition der Klappen 9, 10 durchsetzt und zwar hier in axialer Richtung entlang der Verstellachse V, wobei sich ein über den Mantel 14 in radialer Richtung vorstehender Deckelabschnitt 25 der Getränkesubstratkapsel 3 axial in einem Bereich zwischen den Klappen 9, 10 und dem ersten Injektionskammerteil 5 befindet - axial stützt sich die Getränkesubstratkapsel 3 mit einem unteren Umfangsrand 26 (Ringschulter/Deckelrand) an den Klappen 9, 10, genauer deren Auflageabschnitten in vertikaler Richtung ab.

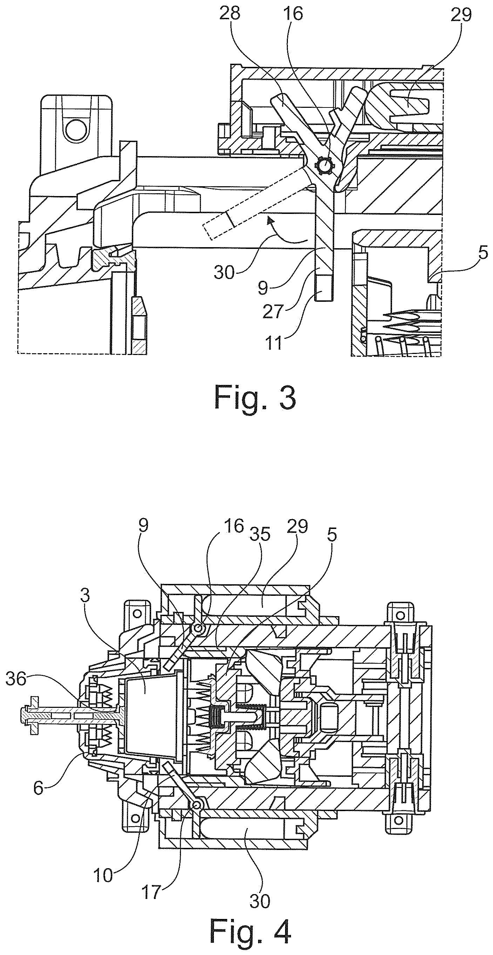

In Fig. 3 ist die erste Klappe 19 im Detail dargestellt und zwar zum einen in der Zuführposition sowie (teilweise strichliert) um die erste Schwenkachse 16 verschwenkt. Jedenfalls ist zu erkennen, dass die erste Klappe 9 (ebenso wie die zweite Klappe 10) einen den Auflageabschnitt 11 (hier teilkreisförmig) aufweisenden (ersten) Halteflügel 27 (die Halteflügel sind in der Zuführposition der Klappen 9, 10 in der Art von Saloon-Türen angeordnet) aufweist, der in die Bewegungsbahn B hineinragt. Bezüglich der ersten Schwenkachse 16 gegenüberliegend weist die erste Klappe einen (ersten) Betätigungsklappenflügel 28 auf, über den, wie später noch im Detail erläutert werden wird, hier beispielhaft über ein erstes Druckstück 29 eine Rückstellkraft aufgebracht wird, die bestrebt ist, die Klappe in die Zuführposition zu verstellen. In Fig. 3 sind zur Verdeutlichung die Bezugszeichen an die in der Zuführposition befindliche erste Klappe 9 eingezeichnet. Dabei ist zu erkennen, dass der Halteflügel 27 und der Betätigungsflügel 28 einen Winkel von hier näherungsweise 135° aufspannen.

Die erste Klappe 9 kann verschwenkt werden in der Pfeilrichtung 30, hier vorliegend im Urzeigersinn, um so aus dem Verstellbereich des ersten Injektionskammerteils 5 heraus verschwenkt zu werden, wobei hierbei das erste Druckstück 29 in der Zeichnungsebene nach rechts, d.h. gegenläufig zum ersten Injektionskammerteil 5 verstellt wird.

Konkret befindet sich der jeweilige Betätigungsklappenflügel 28 außerhalb der Bewegungsbahn B des ersten Injektionskammerteils 5, während sich der Halteflügel 27 in der Zuführposition der Klappe 9 in der Bewegungsbahn B befindet, so dass das erste Injektionskammerteil 5 bei seiner translatorischen Verstellbewegung gegen die Klappen 9, 10, genauer deren Halteflügel 27 verstellt werden kann, wodurch die Klappen 9, 10 dann ineinander entgegengesetzte Umdrehungsrichtungen um deren jeweilige Schwenkachse 16, 17 verschwenkt werden, bis auch die Halteflügel 27 der Klappen 9, 10 (ebenso wie dann immer noch die Betätigungsklappenflügel) aus der Bewegungsbahn B des ersten Injektionskammerteils 5 heraus verstellt sind.

Aus Fig. 1 ist nochmal das erste Druckstück 29 sowie das korrespondierende zweite Druckstück 31 zu erkennen. Lediglich exemplarisch am Beispiel des ersten Druckstücks 29 sind (erste) Federmittel 32 gezeigt (zweite Federmittel sind nicht eingezeichnet) die das erste Druckstück 29 gegen den ersten Betätigungsklappenflügel 28 kraftbeaufschlagen und somit die erste Klappe in der Zuführposition zuhalten.

Dem ersten Druckstück 29 ist (wie auch dem zweiten Druckstück 31) ein Anschlag 33, 34 zugeordnet, um somit den maximalen Verstellweg, hier in der Zeichnungsebene nach links, d.h. in Richtung des zweiten Injektionskammerteils 6 zu begrenzen.

Nach dem Zuführvorgang wird, wie sich aus Fig. 4 ergibt, das erste Injektionskammerteil 5 entlang der Verstellachse V auf das becherförmige bzw. wannenförmige zweite Injektionskammerteil 6 zu verstellt und somit die Getränkesubstratkapsel 3 in dieses hinein, aus welchem dann auch nach einem Injektionsprozess das fertige Getränk, beispielsweise Kaffee, abgeleitet werden kann. Wie erwähnt erfolgt das Verschwenken der Klappen 9, 10 durch Wechselwirkung mit dem beispielsweise ringförmigen Axialfortsatz 35 des ersten Injektionskammerteils 5. Das Verschwenken der Klappen 9, 10 bewirkt, dass die Druckstücke 29, 31 gegenläufig zur Bewegungsrichtung B des ersten Injektionskammerteils 5, d.h. hier in der Zeichnungsebene nach rechts, bewegt werden, wodurch die in Fig. 4 aus Übersichtlichkeitsgründen nicht eingezeichneten Federmittel 32 (weiter) gespannt werden.
Diese Verstellbewegung ist durch weitere mit den Druckstücken 29, 31 wechselwirkende Anschläge 37, 38 (vgl. Fig. 5) begrenzt.

In Fig. 5 ist die Injektionskammer 4 nahezu geschlossen. Vollendet ist der Verstellprozess noch nicht, sondern erst dann, wenn eine hier beispielhaft am zweiten Injektionskammerteil 6 angeordnete axiale Ringdichtung 39 zum Abdichten der Injektionskammerteile 5, 6 gegeneinander gepresst ist.

Erst nach Schließen der Injektionskammer 4 sollte Wasser injiziert werden.

Fig. 6 zeigt ein Betriebszustand nach beendeter Wasserinjektion. Die Getränkesubstratkapsel 3 wurde bereits ein Stück weit aus dem zweiten Injektionskammerteil 6 mittels eines Stempels 36 herausverstellt und befindet sich vollständig in einem Bereich links von den Klappen 9, 10, d.h. vollständig zwischen dem zweiten Injektionskammerteil 6 und den Klappen 9, 10, welche aktuiert durch die Federmittel über die Druckstücke 29, 31 ineinander entgegengesetzte Richtungen zurückverschwenkt werden, um deren jeweilige Schwenkachse 16, 17 bis zum Erreichen der in Fig. 6 wieder gezeigten Zuführposition.

In Fig. 7 ist die Weiterbewegung des Stempels 36 zu erkennen, der die Getränkesubstratkapsel 3 weiter in Richtung bereits zurückverstellter erster Injektionskammer 5 bewegt und zwar entlang der Verstellachse V (vgl. Fig.1).

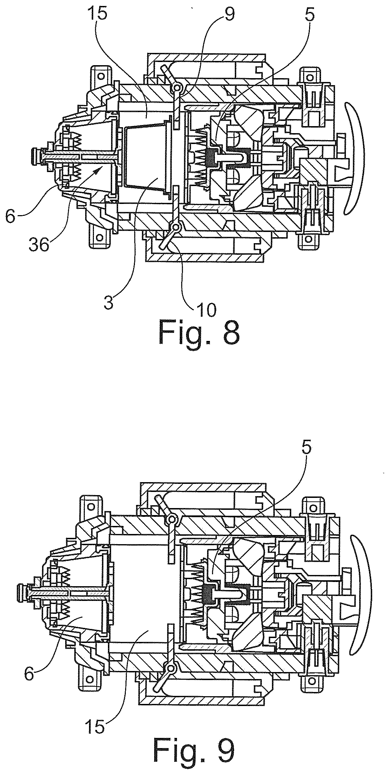

Fig. 8 zeigt einen Moment vor dem Auswurf bzw. Herausfallen durch die Auswurföffnung 15, welche sich in einem Bereich unterhalb der Klappen 9, 10 befindet, durch welche die Kapsel 3 dann schwerkraftbedingt herausfallen kann (in Fig. 9 ist sie bereits herausgefallen).

### Bezugszeichenliste

- 1: Getränkezubereitungsvorrichtung
- 2: Injektionseinrichtung
- 3: Getränkesubstratkapsel
- 4: Injektionskammer
- 5: erstes Injektionskammerteil
- 6: zweites Injektionskammerteil
- 7: Öffnungsmittel
- 8: Rahmenstruktur
- 9: erste Klappe
- 10: zweite Klappe
- 11: erster Auflageabschnitt
- 12: zweiter Auflageabschnitt
- 13: Bereich
- 14: Mantel (hier beispielhaft konisch mit Stufe)
- 15: Auswurföffnung
- 16: erste Schwenkachse
- 17: zweite Schwenkachse
- 18: Standfläche
- 19: Gehäuse
- 20: Gehäusefuß
- 21: Gehäusefuß
- 22: Unterseite
- 23: Unterseite
- 24: Aufstellfläche
- 25: Deckelabschnitt
- 26: Umfangsbund
- 27: Halteflügel
- 28: Betätigungsklappenflügel
- 29: erstes Druckstück
- 30: Pfeilrichtung
- 31: zweites Druckstück
- 32: Federmittel
- 33: Anschlag
- 34: Anschlag
- 35: Axialfortsatz
- 36: Stempel
- 37: Anschlag
- 38: Anschlag
- 39: Ringdichtung

- B: Bewegungsbahn
- V: Verstellachse
- Z: Zuführrichtung

## Patentansprüche

1. Getränkezubereitungsvorrichtung zum Herstellen von Getränken aus, bevorzugt kompostierbaren, Getränkesubstratkapseln (3), insbesondere Kaffeekapseln, mit einem eine, bevorzugt horizontale, Standfläche definierenden Gehäuse (19), mit einer Injektionseinrichtung (2) zum Auflösen und/oder Auslaugen von in einer Getränkesubstratkapsel (3) bevorratetem Getränkesubstrat, und mit Wasserversorgungsmitteln zum Versorgen der Injektionseinrichtung (2) mit Wasser, wobei die Injektionseinrichtung (2) eine Injektionskammer (4) zur Aufnahme der Getränkesubstratkapsel (3) aufweist, umfassend ein erstes Injektionskammerteil (5) das, bevorzugt translatorisch, relativ zu einem, bevorzugt ortsfesten, zweiten Injektionskammerteil (6) zum Öffnen und Schließen der Injektionskammer (4) zwischen einer Öffnungsposition, in der die Injektionskammer (4) geöffnet und eine Getränkesubstratkapsel (3) zuführbar ist und einer Schließposition, in der die Injektionskammer (4) geschlossen ist, entlang einer Bewegungsbahn (B) verstellbar ist, sowie mit einer Auswurföffnung (15), durch die die Getränkesubstratkapsel (3) nach dem Injektionsvorgang auswerfbar ist, sowie mit eine, insbesondere durch Verstellen des ersten Injektionskammerteils (5) in Richtung des zweiten Injektionskammerteils (6), um eine erste Schwenkachse (16) aus einer Zuführposition in eine Freigabeposition verschwenkbare erste Klappe (9) umfassenden Rückhaltemitteln zum Sichern der Getränkesubstratkapsel (3) vor einem Durchfallen durch die Auswurföffnung (15) beim Zuführvorgang, wobei die erste Klappe (9) entgegen der Federkraft von Federmitteln (32) um die erste Schwenkachse (16) verschwenkbar ist, die die erste Klappe (9) in Richtung Zuführposition federkraftbeaufschlagen, und wobei die erste Schwenkachse (16) winklig, bevorzugt rechtwinklig, zu der Standfläche der Getränkezubereitungsvorrichtung (1) ausgerichtet ist,
**dadurch gekennzeichnet,**
**dass** die Federmittel (32) die erste Klappe (9) mittelbar über ein Druckstück (29) federkraftbeaufschlagen, welches verstellbar geführt ist, bevorzugt gegenläufig zu einer Verstellbewegung des ersten Injektionskammerteils (5).

2. Getränkezubereitung nach Anspruch 1,
**dadurch gekennzeichnet,**
**dass** das Druckstück parallel zu einer Verstellachse (V) des ersten Injektionskammerteils (5) verstellbar geführt ist.

3. Getränkezubereitungsvorrichtung nach einem der vorhergehenden Ansprüche,
**dadurch gekennzeichnet,**
**dass** dem Druckstück (29) ein Anschlag (33) zur Begrenzung eines Verstellweges des Druckstückes (29), insbesondere in eine Richtung auf das zweite Injektionskammerteil (6) zu, zur Definition der Zuführposition der ersten Klappe (9), zugeordnet ist, an dem sich das Druckstück (29) in der Zuführposition der ersten Klappe (9) abstützt.

4. Getränkezubereitungsvorrichtung nach einen der vorhergehenden Ansprüche,
**dadurch gekennzeichnet**,
die erste Klappe (9) derart relativ zu dem ersten Injektionskammerteil (5) angeordnet ist, dass eine zugeführte Getränkesubstratkapsel (3), insbesondere mit einem Kapseldeckel oder alternativ einem Kapselboden, sich in einem Bereich (13) zwischen der ersten Klappe (9) und dem ersten Injektionskammerteil (5) erstreckt.

5. Getränkezubereitungsvorrichtung nach einem der vorhergehenden Ansprüche,
**dadurch gekennzeichnet,**
**dass** die erste Klappe (9) derart angeordnet ist, dass diese eine zugeführte Getränkesubstratkapsel (3) mantelseitig untergreift.

6. Getränkezubereitungsvorrichtung nach einem der vorhergehenden Ansprüche,
**dadurch gekennzeichnet,**
**dass** die Federmittel (32), mittelbar an einem Betätigungsklappenflügel (28) der ersten Klappe (9) angreifen, der bezogen auf die erste Schwenkachse (16) einem Halteflügel (27) der ersten Klappe (9) zum Sichern der Getränkesubstratkapsel (3) gegenüberliegt und insbesondere außerhalb der Bewegungsbahn (B) des ersten Injektionskammerteils (5) angeordnet ist.

7. Getränkezubereitungsvorrichtung nach einem der vorhergehenden Ansprüche,
**dadurch gekennzeichnet,**
**dass** dem zweiten Injektionskammerteil (6) ein insbesondere bodenseitiger, Stempel (36), zum Verstellen der Getränkesubstratkapsel (3) aus dem zweiten Injektionskammerteil (6) heraus, insbesondere in Richtung des ersten Injektionskammerteils (5) zum Auswerfen der Getränkesubstratkapsel (3) durch die Auswurföffnung (15) zugeordnet ist.

8. Getränkezubereitungsvorrichtung nach einem der vorhergehenden Ansprüche,
**dadurch gekennzeichnet,**
**dass** die erste Klappe (9) derart um die erste Schwenkachse (16) verschwenkbar ist, dass die Getränkesubstratkapsel (3) beim Verstellen aus dem zweiten Injektionskammerteil (6) vollständig in einem Bereich (13) zwischen der ersten Klappe (9) und dem zweiten Injektionskammerteil (6) angeordnet und somit durch die Auswurföffnung (15) auswerfbar ist.

9. Getränkezubereitungsvorrichtung nach einem der vorhergehenden Ansprüche,
**dadurch gekennzeichnet,**
**dass** die Rückhaltemittel zusätzlich zu der ersten Klappe (9) eine, insbesondere durch Verstellen des ersten Injektionskammerteils (5) in Richtung des zweiten Injektionskammerteils (6), um eine sich winklig, bevorzugt rechtwinklig, zu der Standfläche und bevorzugt parallel zu der ersten Schwenkachse (16), erstreckende zweite Schwenkachse (17) verschwenkbare zweite Klappe (10) umfassen, wobei die zweite Klappe (10) bevorzugt entgegen der Kraft von, insbesondere über ein Druckstück (31) auf die zweite Klappe (10) wirkenden, Federmitteln (32), bevorzugt durch Wechselwirkung mit dem ersten Injektionskammerteil (5), verschwenkbar ist.

10. System, umfassen eine Getränkezubereitungsvorrichtung (1) nach einem der vorhergehenden Ansprüche sowie eine dieser zuführbare, bevorzugt einen Deckel, umfassende Getränkesubstratkapsel (3), wobei sich die Getränkesubstratkapsel (3) vorzugsweise im in die Getränkezubereitungsvorrichtung (1) zugeführten Zustand, bei in der Öffnungsposition befindlicher erstem Injektionskammerteil (5) in einen Bereich, insbesondere entlang einer Verstellachse (V) des ersten Injektionskammerteils (5), zwischen der erste Klappe (9) und dem ersten Injektionskammerteil (5) erstreckt.

11. Verfahren zum Betreiben einer Getränkezubereitungsvorrichtung nach einem der Ansprüche 1 bis 9,
**gekennzeichnet durch** die Schritte:
- Zuführen einer Getränkesubstratkapsel (3), bevorzugt derart, dass sich diese in einen Bereich (13), insbesondere entlang einer Verstellachse (V) des ersten Injektionskammerteils (5), zwischen der ersten Klappe (9) und dem ersten Injektionskammerteil (5) erstreckt,
- insbesondere seitliches, Verschwenken der ersten Klappe (9) um die erste Schwenkachse (16), bevorzugt mittels des ersten Injektionskammerteils (5) beim Verstellen des ersten Injektionskammerteils (5) in Richtung zweiten Injektionskammerteil (6), bevorzugt zusammen mit der Getränkesubstratkapsel (3).

12. Verfahren nach Anspruch 11,
**dadurch gekennzeichnet,**
**dass** die Getränkesubstratkapsel (3) in der Zuführposition der ersten Klappe (9) von der ersten Klappe (9) mantelseitig auf einer der Auswurföffnung (15) zugewandten Seite untergriffen wird.

13. Verfahren nach einem der Ansprüche 11 oder 12,
**dadurch gekennzeichnet,**
**dass** die Getränkesubstratkapsel (3) derart zugeführt wird, dass diese in der Zuführposition der ersten Klappe (9), insbesondere mit einem, bevorzugt in radialer Richtung über einen Kapselmantel vorstehenden, Deckel in einem Bereich (13), insbesondere entlang einer Verstellachse (V) des ersten Injektionskammerteils (5), zwischen der ersten Klappe (9) und dem ersten Injektionskammerteil (5) ragt.

14. Verfahren nach einem der Ansprüche 11 bis 13,
**dadurch gekennzeichnet,**
**dass** die Getränkesubstratkapsel (3) zusammen mit dem ersten Injektionskammerteil (5) zum Schließen der Injektionskammer (4) in Richtung des zweiten Injektionskammerteils (6) verstellt und dabei die erste Klappe (9) um die erste Schwenkachse (16) verschwenkt wird und dass nach erfolgter Injektion die Getränkesubstratkapsel (3) aus dem zweiten Injektionskammerteil (6) heraus verstellt wird und sich dabei vollständig in einem Bereich (13) zwischen dem zweiten Injektionskammerteil (6) und der ersten Klappe (9) befindet und durch die Auswurföffnung (15), insbesondere nach unten, ausgeworfen wird.

## Claims

1. A beverage preparation device for preparing beverages from preferably compostable beverage substrate capsules (3), in particular coffee capsules, comprising a housing (19) defining a preferably horizontal base, comprising an injection device (2) for dissolving and/or leaching a beverage substrate stored in a beverage substrate capsule (3), and comprising water supply means for supplying the injection device (2) with water, the injection device (2) having an injection chamber (4) for receiving the beverage substrate capsule (3), comprising a first injection chamber part (5) which can be displaced, preferably in a translational manner relative to a preferably fixed second injection chamber part (6), along a path of displacement (B) between an open position, in which the injection chamber (4) is open and a beverage substrate capsule (3) can be inserted, and a closed position, in which the injection chamber (4) is closed, so as to open and close the injection chamber (4), and comprising an ejection opening (15) through which the beverage substrate capsule (3) can be ejected after the injection process, and comprising retention means for securing the beverage substrate capsule (3) against dropping through the ejection opening (15) during the insertion process, the retention means comprising a first flap (9) which can be pivoted around a first pivot axis (16) from an insertion position into a release position in particular by displacing the first injection chamber part (5) in the direction of the second injection chamber part (6), the first flap (9) being pivotable around the first pivot axis (16) against the spring force of spring means (32) which subject the first flap (9) to a spring force acting in the direction of the insertion position, and the first pivot axis (16) being oriented at an angle, preferably at a right angle, to the base of the beverage preparation device (1),
**characterized in that**
the spring means (32) subject the first flap (9) to the spring force indirectly via a pressure piece (29) which is guided in a displaceable manner, preferably contrary to a displacing movement of the first injection chamber part (5).

2. The beverage preparation device according to claim 1,
**characterized in that**
the pressure piece is guided in a displaceable manner parallel to an axis of displacement (V) of the first injection chamber part (5).

3. The beverage preparation device according to any one of the preceding claims,
**characterized in that**
a stop (33) for limiting a path of displacement of the pressure piece (29) in particular in a direction toward the second injection chamber part (6) is assigned to the pressure piece (29) so as to define the insertion position of the first flap (9), the pressure piece (29) being supported on said stop (33) when the first flap (9) is in the insertion position.

4. The beverage preparation device according to any one of the preceding claims,
**characterized in that**
the first flap (9) is disposed relative to the first injection chamber part (5) in such a manner that an inserted beverage substrate capsule (3), in particular a capsule lid or alternatively a capsule bottom thereof, extends in an area (13) between the first flap (9) and the first injection chamber part (5).

5. The beverage preparation device according to any one of the preceding claims,
**characterized in that**
the first flap (9) is disposed in such a manner that it engages shell-side under an inserted beverage substrate capsule (3).

6. The beverage preparation device according to any one of the preceding claims,
**characterized in that**
the spring means (32) indirectly engage an actuation flap wing (28) of the first flap (9), said wing (28), in relation to the first pivot axis (16), being located opposite a retaining wing (27) of the first flap (9) for securing the beverage substrate capsule (3) and being disposed in particular outside of the path of displacement (B) of the first injection chamber part (5).

7. The beverage preparation device according to any one of the preceding claims,
**characterized in that**
a plunger (36), in particular a bottom-side plunger, for displacing the beverage substrate capsule (3) out of the second injection chamber part (6), in particular in the direction of the first injection chamber part (5) so as to eject the beverage substrate capsule (3) through the ejection opening (15), is assigned to the second injection chamber part (6).

8. The beverage preparation device according to any one of the preceding claims,
**characterized in that**
the first flap (9) can be pivoted around the first pivot axis (16) in such a manner that the beverage substrate capsule (3) is disposed entirely in an area (13) between the first flap (9) and the second injection chamber part (6) when being displaced out of the second injection chamber part (6) and can thus be ejected through the ejection opening (15).

9. The beverage preparation device according to any one of the preceding claims,
**characterized in that**
in addition to the first flap (9), the retention means comprise a second flap (10) which, in particular by displacing the first injection chamber part (5) in the direction of the second injection chamber part (6), is pivotable around a second pivot axis (17) which extends at an angle, preferably at a right angle, to the base and preferably parallel to the first pivot axis (16), the second flap (10) being pivotable, preferably against the force of spring means (32) acting on the second flap (10) in particular via a pressure piece (31), preferably by interaction with the first injection chamber part (5).

10. A system comprising a beverage preparation device (1) according to any one of the preceding claims and a beverage substrate capsule (3) that can be inserted into said device and preferably has a lid, the beverage substrate capsule (3), when it has been inserted into the beverage preparation device (1) and when the first injection chamber part (5) is in the open position, preferably extending into an area between the first flap (9) and the first injection chamber part (5) in particular along an axis of displacement (V) of the first injection chamber part (5).

11. A method for operating a beverage preparation device according to any one of claims 1 to 9,
**characterized by** the steps of:
- inserting a beverage substrate capsule (3) preferably in such a manner that it extends into an area (13) between the first flap (9) and the first injection chamber part (5) in particular along an axis of displacement (V) of the first injection chamber part (5),
- pivoting the first flap (9) in particular laterally around the first pivot axis (16), preferably by means of the first injection chamber part (5) when the first injection chamber part (5) is being displaced in the direction of the second injection chamber part (6), preferably together with the beverage substrate capsule (3).

12. The method according to claim 11,
**characterized in that**
when the first flap (9) is in the insertion position, the first flap (9) engages shell-side under the beverage substrate capsule (3) on a side facing toward the ejection opening (15).

13. The method according to any one of claims 11 or 12,
**characterized in that**
the beverage substrate capsule (3) is inserted in such a manner that in particular a lid thereof, which preferably protrudes beyond a capsule shell in the radial direction, extends into an area (13) between the first flap (9) and the first injection chamber part (5) in particular along an axis of displacement (V) of the first injection chamber part (5) when the first flap (9) is in the insertion position.

14. The method according to any one of claims 11 to 13,
**characterized in that**
in order to close the injection chamber (4), the beverage substrate capsule (3) is displaced together with the first injection chamber part (5) in the direction of the second injection chamber part (6) and in doing so the first flap (9) is pivoted around the first pivot axis (16) and that, after injection is complete, the beverage substrate capsule (3) is displaced out of the second injection chamber part (6) while being located entirely in an area (13) between the second injection chamber part (6) and the first flap (9) and is ejected, in particular downward, through the ejection opening (15).

## Revendications

1. Dispositif de préparation de boissons pour la préparation de boissons à partir de capsules de substrat de boisson (3) préférablement compostables, notamment de capsules de café, comprenant un boîtier (19) définissant une base préférablement horizontale, comprenant un dispositif d'injection (2) pour dissoudre et/ou lessiver un substrat de boisson contenu dans une capsule de substrat de boisson (3), et comprenant des moyens d'alimentation en eau pour alimenter le dispositif d'injection (2) en eau, le dispositif d'injection (2) ayant une chambre d'injection (4) pour recevoir la capsule de substrat de boisson (3), comprenant une première partie (5) de la chambre d'injection qui peut être déplacée, préférablement en translation par rapport à une deuxième partie (6) de la chambre d'injection préférablement fixe, le long d'une voie de déplacement (B) entre une position ouverte, dans laquelle la chambre d'injection (4) est ouverte et une capsule de substrat de boisson (3) peut être introduite, et une position fermée, dans laquelle la chambre d'injection (4) est fermée, afin d'ouvrir et fermer la chambre d'injection (4), et comprenant une ouverture d'éjection (15) par laquelle la capsule de substrat de boisson (3) peut être éjectée après le processus d'injection, et comprenant des moyens de retenue pour sécuriser la capsule de substrat de boisson (3) contre une chute par l'ouverture d'éjection (15) lors du processus d'introduction, les moyens de retenue comprenant une première clapet (9) qui peut être pivotée à partir d'une position d'introduction dans une position de libération autour d'un premier axe de pivotement (16) notamment en déplaçant la première partie (5) de la chambre d'injection dans la direction de la deuxième partie (6) de la chambre d'injection, la première clapet (9) étant pivotée autour du premier axe de pivotement (16) contre la force de ressort des moyens de ressort (32) qui soumettent la première clapet (9) à une force de ressort agissant dans la direction de la position d'introduction, et le premier axe de pivotement (16) étant orienté à un angle préférablement droit par rapport à la base du dispositif de préparation de boissons (1),
**caractérisé en ce que**
les moyens de ressort (32) soumettent la première clapet (9) à la force de ressort de manière indirecte par l'intermédiaire d'un élément de pression (29) qui est guidé de manière déplaçable, préférablement dans le sens contraire à un mouvement de déplacement de la première partie (5) de la chambre d'injection.

2. Dispositif de préparation de boissons selon la revendication 1,
**caractérisé en ce que**
l'élément de pression est guidé de manière déplaçable parallèlement à un axe de déplacement (V) de la première partie (5) de la chambre d'injection.

3. Dispositif de préparation de boissons selon l'une quelconque des revendications précédentes,
**caractérisé en ce qu'**
une butée (33) pour limiter une voie de déplacement de l'élément de pression (29) notamment dans une direction vers la deuxième partie (6) de la chambre d'injection est assignée à l'élément de pression (29) afin de définir la position d'introduction de la première clapet (9), l'élément de pression (29) s'appuyant sur ladite butée (33) quand la première clapet (9) est dans la position d'introduction.

4. Dispositif de préparation de boissons selon l'une quelconque des revendications précédentes,
**caractérisé en ce que**
la première clapet (9) est disposée par rapport à la première partie (5) de la chambre d'injection de telle manière qu'une capsule de substrat de boisson (3) introduite, notamment un couvercle de la capsule ou alternativement un fond de la capsule, s'étend dans une zone (13) entre la première clapet (9) et la première partie (5) de la chambre d'injection.

5. Dispositif de préparation de boissons selon l'une quelconque des revendications précédentes,
**caractérisé en ce que**
la première clapet (9) est disposée de telle manière qu'elle saisit par-dessous une capsule de substrat de boisson (3) introduite du côté d'enveloppe.

6. Dispositif de préparation de boissons selon l'une quelconque des revendications précédentes,
**caractérisé en ce que**
les moyens de ressort (32) agissent indirectement sur un battant de clapet d'actuation (28) de la première clapet (9), ledit battant faisant face, par rapport au premier axe de pivotement (16), à un battant de retenue (27) de la première clapet (9) pour sécuriser la capsule de substrat de boisson (3) et étant disposé notamment en dehors de la voie de déplacement (B) de la première partie (5) de la chambre d'injection.

7. Dispositif de préparation de boissons selon l'une quelconque des revendications précédentes,
**caractérisé en ce qu'**
un piston (36), notamment du côté du fond, pour déplacer la capsule de substrat de boisson (3) à partir de la deuxième partie (6) de la chambre d'injection, notamment dans la direction de la première partie (5) de la chambre d'injection afin d'éjecter la capsule de substrat de boisson (3) par l'ouverture d'éjection (15), est assigné à la deuxième partie (6) de la chambre d'injection.

8. Dispositif de préparation de boissons selon l'une quelconque des revendications précédentes,
**caractérisé en ce que**
la première clapet (9) peut être pivotée autour du premier axe de pivotement (16) de telle manière que la capsule de substrat de boisson (3) est entièrement disposée dans une zone (13) entre la première clapet (9) et la deuxième partie (6) de la chambre d'injection lors du déplacement à partir de la deuxième partie (6) de la chambre d'injection et peut ainsi être éjectée par l'ouverture d'éjection (15).

9. Dispositif de préparation de boissons selon l'une quelconque des revendications précédentes,
**caractérisé en ce qu'**
outre la première clapet (9), les moyens de retenue comprennent une deuxième clapet (10) qui, notamment en déplaçant la première partie (5) de la chambre d'injection dans la direction de la deuxième partie (6) de la chambre d'injection, est pivotable autour d'un deuxième axe de pivotement (17) qui s'étend à un angle préférablement droit par rapport à la base et préférablement parallèle au premier axe de pivotement (16), la deuxième clapet (10) étant pivotable, préférablement contre la force des moyens de ressort (32) agissant sur la deuxième clapet (10) notamment par l'intermédiaire d'un élément de pression (31), préférablement par interaction avec la première partie (5) de la chambre d'injection.

10. Système comprenant un dispositif de préparation de boissons (1) selon l'une quelconque des revendications précédentes et une capsule de substrat de boisson (3) qui peut être introduite dans ledit dispositif et qui comprend préférablement un couvercle, la capsule de substrat de boisson (3), dans l'état introduit dans le dispositif de préparation de boissons (1), quand la première partie (5) de la chambre d'injection est dans la position ouverte, s'étendant préférablement dans une zone entre la première clapet (9) et la première partie (5) de la chambre d'injection notamment le long d'un axe de déplacement (V) de la première partie (5) de la chambre d'injection.

11. Procédé de fonctionnement d'un dispositif de préparation de boissons selon l'une quelconque des revendications 1 à 9,
**caractérisé par** les étapes consistant à :
- introduire une capsule de substrat de boisson (3) préférablement de telle manière qu'elle s'étend dans une zone (13) entre la première clapet (9) et la première partie (5) de la chambre d'injection notamment le long d'un axe de déplacement (V) de la première partie (5) de la chambre d'injection,
- pivoter la première clapet (9) notamment latéralement autour du premier axe de pivotement (16), préférablement à l'aide de la première partie (5) de la chambre d'injection quand la première partie (5) de la chambre d'injection est déplacée dans la direction de la deuxième partie (6) de la chambre d'injection, préférablement conjointement avec la capsule de substrat de boisson (3).

12. Procédé selon la revendication 11,
**caractérisé en ce que**
quand la première clapet (9) est dans la position d'introduction, la première clapet (9) saisit, du côté d'enveloppe, par-dessous la capsule de substrat de boisson (3) sur un côté tourné vers l'ouverture d'éjection (15).

13. Procédé selon l'une quelconque des revendications 11 ou 12,
**caractérisé en ce que**
la capsule de substrat de boisson (3) est introduite de telle manière qu'elle, notamment par un couvercle s'étendant préférablement au-delà d'un enveloppe de la capsule dans la direction radiale, fait saillie dans une zone (13) entre la première clapet (9) et la première partie (5) de la chambre d'injection notamment le long d'un axe de déplacement (V) de la première partie (5) de la chambre d'injection quand la première clapet (9) est dans la position d'introduction.

14. Procédé selon l'une quelconque des revendications 11 à 13,
**caractérisé en ce qu'**
afin de fermer la chambre d'injection (4), la capsule de substrat de boisson (3) est déplacée conjointement avec la première partie (5) de la chambre d'injection dans la direction de la deuxième partie (6) de la chambre d'injection et au même temps la première clapet (9) est pivotée autour du premier axe de pivotement (16) et **en ce que**, après l'injection est finie, la capsule de substrat de boisson (3) est déplacée à partir de la deuxième partie (6) de la chambre d'injection, tout en être entièrement située dans une zone (13) entre la deuxième partie (6) de la chambre d'injection et la première clapet (9), et est éjectée, notamment vers le bas, par l'ouverture d'éjection (15).
